# EUROPEAN PATENT APPLICATION

(11) **EP 3 998 660 A1**
(43) Date of publication of application: **18.05.2022**
(21) Application number: 20839958.4
(22) Date of filing: 18.02.2020
(51) Int. Cl.: H01M 4/64, H01M 10/0562, H01M 10/0585, H01M 50/531, H01M 50/543

(54) **BATTERY**

(30) Priority: 12.07.2019 JP 2019130351
(71) Applicant: Panasonic Intellectual Property Management Co., Ltd., Osaka-shi, Osaka 540-6207 (JP)
(72) Inventor: KOGA, Eiichi, Osaka (JP)
(74) Representative: Grünecker Patent- und Rechtsanwälte PartG mbB
(86) International application number: PCT/JP2020/006321
(87) International publication number: WO 2021/009959

(57) **Abstract**

The present disclosure provides a parallel-connected battery with both high output and high reliability. A battery (200) according to the present disclosure includes a plurality of solid-state battery cells (2a) and (2b) and a connection layer (26) disposed between the plurality of solid-state battery cells (2a) and (2b). Each of the plurality of solid-state battery cells (2a) and (2b) includes a positive-electrode current collector (21), a positive-electrode active material layer (12), a solid electrolyte layer (25) containing a solid electrolyte, a negative-electrode active material layer (14), and a negative-electrode current collector (23) laminated in this order. The plurality of solid-state battery cells (2a) and (2b) are electrically connected in parallel, and the negative-electrode current collectors (23) of two adjacent solid-state battery cells (2a) and (2b) are laminated via the connection layer (26).

## Description

The present disclosure relates to a battery.

### Background Art

Parallel-connected batteries are known in which solid-state battery cells are connected in parallel to increase the battery capacity. As a technique related to such parallel connection, for example, Patent Literature 1 discloses a battery with a structure in which a lead electrode is drawn out between current collectors of laminated solid-state battery cells. Patent Literature 2 discloses a battery with a structure in which solid-state battery cells laminated with an insulating layer are connected in parallel.

### Citation List

### Patent Literature

PTL 1: Japanese Unexamined Patent Application Publication No. 2015-187944
PTL 2: Japanese Unexamined Patent Application Publication No. 2004-158222

### Summary of Invention

### Technical Problem

In the related art, there is a demand for a parallel-connected battery with high reliability as well as higher output.

The present disclosure provides a parallel-connected battery with both high output and high reliability.

### Solution to Problem

A battery according to one aspect of the present disclosure includes a plurality of solid-state battery cells and a connection layer disposed between the plurality of solid-state battery cells, wherein each of the plurality of solid-state battery cells includes a structure in which a positive-electrode current collector, a positive-electrode active material layer, a solid electrolyte layer containing a solid electrolyte, a negative-electrode active material layer, and a negative-electrode current collector are laminated in this order, the plurality of solid-state battery cells are electrically connected in parallel, and the positive-electrode current collectors or the negative-electrode current collectors of two adjacent solid-state battery cells among the plurality of solid-state battery cells are laminated via the connection layer.

### Advantageous Effects of Invention

The present disclosure can achieve both high output and high reliability. Brief Description of Drawings

[Fig. 1] Fig. 1 is an explanatory view of a plurality of solid-state battery cells according to an embodiment laminated without being electrically connected in parallel.
[Fig. 2] Fig. 2 is a schematic view of a battery according to an embodiment.
[Fig. 3] Fig. 3 is a schematic view of a battery according to Modified Example 1 of the embodiments.
[Fig. 4] Fig. 4 is a schematic view of a battery according to another example of Modified Example 1 of the embodiments.
[Fig. 5] Fig. 5 is a schematic view of a battery according to Modified Example 2 of the embodiments.
[Fig. 6] Fig. 6 is a schematic view of a battery according to Modified Example 3 of the embodiments.
[Fig. 7] Fig. 7 is a schematic view of a battery according to Modified Example 4 of the embodiments.
[Fig. 8] Fig. 8 is a schematic view of a battery according to Modified Example 5 of the embodiments.
[Fig. 9] Fig. 9 is a schematic view of a battery according to Modified Example 6 of the embodiments.
[Fig. 10] Fig. 10 is a schematic view of a battery according to Modified Example 7 of the embodiments.

### Description of Embodiments

### (Underlying Knowledge Forming Basis of the Present Disclosure)

The present inventors have found following problems when the output of a parallel-connected battery is increased.

The thickness of a current collector of solid-state battery cells constituting a battery can be increased to increase the current capacity of the current collector and the output of the battery. However, the expansion or contraction of a current collector caused by a temperature change during the use of a battery increases with the thickness of the current collector. This increases the stress inside a solid-state battery cell caused by the expansion or contraction of a current collector. An increase in stress caused by a temperature change makes solid-state battery cells break easily and reduces the reliability of the battery. Thus, an increase in the thickness of a current collector to increase the output of the battery tends to reduce the reliability of the battery due to a temperature change. Thus, it is difficult to provide the battery with both higher output and high reliability.

Accordingly, the present disclosure provides a parallel-connected battery with both high output and high reliability.

### (Outline of Present Disclosure)

An outline of one embodiment of the present disclosure is described below.

A battery according to an embodiment of the present disclosure includes a plurality of solid-state battery cells and a connection layer disposed between the plurality of solid-state battery cells, wherein each of the plurality of solid-state battery cells includes a structure in which a positive-electrode current collector, a positive-electrode active material layer, a solid electrolyte layer containing a solid electrolyte, a negative-electrode active material layer, and a negative-electrode current collector are laminated in this order, the plurality of solid-state battery cells are electrically connected in parallel, and the positive-electrode current collectors or the negative-electrode current collectors of two adjacent solid-state battery cells among the plurality of solid-state battery cells are laminated via the connection layer.

Thus, the negative-electrode current collectors or the positive-electrode current collectors of the plurality of solid-state battery cells are adjacent to each other via the connection layer, and an electric current from two adjacent solid-state battery cells flows through two adjacent negative-electrode current collectors or two adjacent positive-electrode current collectors. Thus, the current collectors are shared by the two adjacent solid-state battery cells, and the cross-sectional area of a current path doubles the cross-sectional area of a current path through one current collector without increasing the thickness of the current collectors. This halves the resistance of each current collector. Even for the current path with the doubled cross-sectional area, there is no change in thermal expansion per current collector and in stress on the plurality of solid-state battery cells due to a temperature change of the current collectors. This disperses the stress on the solid-state battery cells due to a temperature change of two current collectors separated by the connection layer. Thus, the solid-state battery cells are less likely to break than solid-state battery cells including current collectors with an increased thickness. This increases the current capacity of the current collectors and at the same time prevents the solid-state battery cells from breaking due to a temperature change. Consequently, a parallel-connected battery with both high output and high reliability can be provided.

For example, a Young's modulus of the connection layer may be lower than a Young's modulus of the positive-electrode current collector and the negative-electrode current collector.

Thus, the connection layer is softer than the current collectors, and the deformation of the connection layer relieves the stress on the solid-state battery cells due to a temperature change of the current collectors. Furthermore, pressure in the laminating process in the production of the battery deforms the connection layer and improves the bonding between the connection layer and the current collectors. This can further improve the reliability of the battery.

For example, the connection layer may contain a solid electrolyte.

The solid electrolyte tends to deform under pressure. This can more easily relieve the stress on the solid-state battery cells caused by expansion or contraction of the current collectors due to a temperature change. This can further improve the reliability of the battery.

For example, the connection layer may contain a resin.

This makes it easier to form a connection layer that is softer and has a lower Young's modulus than the current collectors. A resin, which has a relatively small specific gravity, in the connection layer can increase the weight energy density of the battery.

For example, the connection layer may contain an electrically conductive material.

Thus, in addition to the current collectors, the connection layer can also serve as an electric conductor, increase the current capacity taken from the solid-state battery cell, and increase the output of the battery.

For example, the connection layer may be composed of a solid electrolyte and an electrically conductive material.

This can relieve the stress on the solid-state battery cells caused by expansion or contraction of the current collectors due to a temperature change and increase the current capacity.

For example, at least part of an end portion of the connection layer may be bent.

In such a case, the connection layer bites into the solid-state battery cells, is difficult to separate from the solid-state battery cells, and can be prevented from delaminating from a side surface. This can further improve the reliability of the battery.

For example, a terminal electrode in contact with a side surface of the solid-state battery cells and coupled to the negative-electrode current collector or the positive-electrode current collector of each of the solid-state battery cells may be further provided, and at least part of an end portion of the connection layer in a bent state may be in contact with the terminal electrode.

This can make the contact area between the connection layer and the terminal electrode larger than the contact area between a connection layer without the bent end portion and the terminal electrode. Thus, the connection layer facilitates heat dissipation from the current collectors to the terminal electrode and can prevent the temperature rise of the battery. This can further improve the reliability of the battery.

For example, a terminal electrode in contact with a side surface of the solid-state battery cells and coupled to the negative-electrode current collector or the positive-electrode current collector of each of the solid-state battery cells may be further provided, and at least part of an end portion of the connection layer in a bent state may be buried in the terminal electrode.

This can make the contact area between the connection layer and the terminal electrode larger than the contact area between a connection layer without the bent end portion and the terminal electrode. Thus, the connection layer facilitates heat dissipation from the current collectors to the terminal electrode and can prevent the temperature rise of the battery. Furthermore, the terminal electrode covers the end portion of the connection layer, and the fixing strength between the terminal electrode and the connection layer is also increased. This can further improve the reliability of the battery.

For example, the solid electrolyte layer of each of the solid-state battery cells may be in contact with at least part of side surfaces of the positive-electrode current collector, the positive-electrode active material layer, the negative-electrode current collector, and the negative-electrode active material layer.

Thus, the electronically nonconductive solid electrolyte layer is in contact with at least part of side surfaces of the positive-electrode active material layer, the negative-electrode active material layer, the positive-electrode current collector, and the negative-electrode current collector. This prevents the positive-electrode active material layer, the negative-electrode active material layer, the positive-electrode current collector, and the negative-electrode current collector from coming into contact with a constituent with a different polarity and forming a short circuit. This can further improve the reliability of the battery.

For example, the solid-state battery cells may be laminated such that the solid electrolyte layers of two adjacent solid-state battery cells among the solid-state battery cells are in contact with each other.

In such a case, the solid electrolytes in the solid electrolyte layers of the solid-state battery cells laminated in contact with each other easily adhere to each other, and the multilayer structure of the solid-state battery cells can be further strengthened. This can further improve the reliability of the battery.

For example, each of the plurality of solid-state battery cells may include a sealing member disposed between the positive-electrode current collector and the negative-electrode current collector, and the sealing member may be disposed outside the positive-electrode active material layer and the negative-electrode active material layer in a plan view.

In such a case, the sealing member is disposed outside the positive-electrode active material layer and the negative-electrode active material layer and can prevent damage to the positive-electrode active material layer and the negative-electrode active material layer caused by impact from the outside or the like. This can further improve the reliability of the battery.

Embodiments are more specifically described below with reference to the accompanying drawings.

The following embodiments are general or specific examples. The numerical values, shapes, materials, constituents, arrangement and connection of the constituents, and the like in the following embodiments are only examples and are not intended to limit the present disclosure. Among the constituents in the following embodiments, constituents not described in the independent claims defining the highest level concepts are described as optional constituents.

The accompanying figures are not necessarily precise figures. Like parts are denoted by like reference numerals throughout the figures. Parts once described are not described again or are simply described thereafter.

In the present specification and drawings, the x-axis, y-axis, and z-axis refer to three axes in the three-dimensional rectangular coordinate system. In each embodiment, the z-axis direction is the thickness direction of the battery. The term "thickness direction", as used herein, refers to a direction perpendicular to the surface on which each layer is laminated.

The term "in a plan view", as used herein, means that the battery is viewed in the laminating direction of the battery, and the term "thickness", as used herein, refers to the length of the battery and each layer in the laminating direction.

The terms "in" and "out" in "inside" and "outside", as used herein, refer to in and out when the battery is viewed in the laminating direction of the battery.

The terms "above" and "below" in the structure of the battery, as used herein, do not necessarily indicate upward (vertically upward) and downward (vertically downward) in the sense of absolute spatial perception but indicates the relative positional relationship based on the laminating sequence in a multilayer structure. The terms "upward" and "downward" are applied not only to the case where two constituents are spaced apart from each other and another constituent is disposed between the two constituents but also to the case where two constituents are closely disposed from each other and are in contact with each other.

### (Embodiments)

### [Structure of Battery]

First, a battery according to the present embodiment is described below.

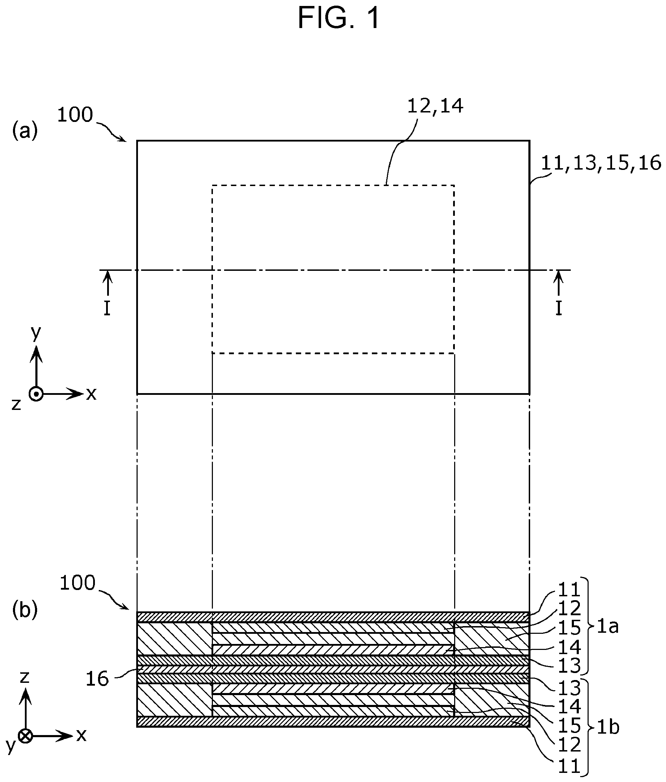

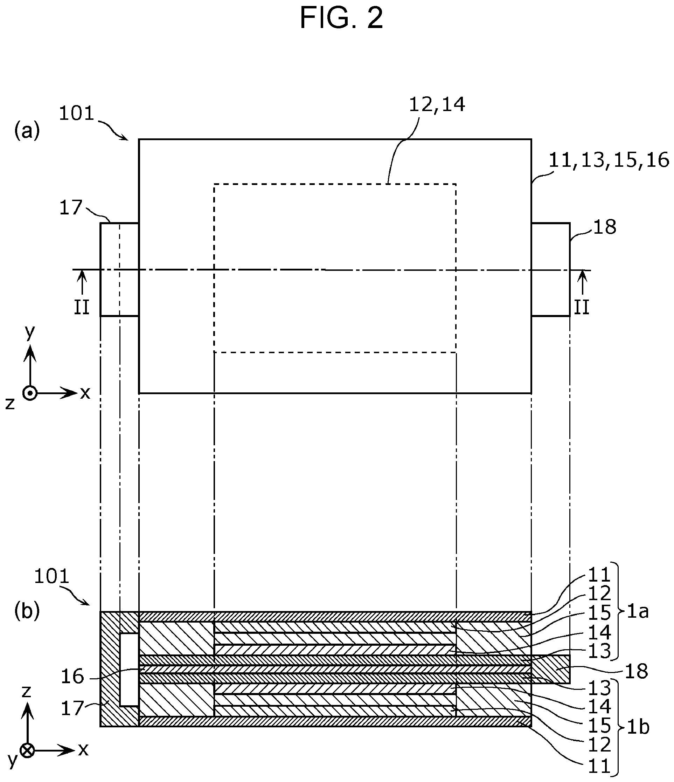

Fig. 1 is an explanatory view of a plurality of solid-state battery cells according to an embodiment laminated without being electrically connected in parallel. Fig. 1 schematically illustrates a battery 100 in which two solid-state battery cells 1a and 1b are laminated. Fig. 1(a) is a top view of the battery 100. In Fig. 1(a), the planar shapes of the constituents of the battery 100 viewed from above are indicated by a solid line or a broken line. Fig. 1(b) is a cross-sectional view of a cross section of the battery 100 taken along the line I-I of Fig. 1(a). Fig. 2 is a schematic view of a battery 101 according to the present embodiment. Fig. 2(a) is a top view of the battery 101. In Fig. 2(a), the planar shapes of the constituents of the battery 101 viewed from above are indicated by a solid line or a broken line. Fig. 2(b) is a cross-sectional view of a cross section of the battery 101 taken along the line II-II of Fig. 2(a).

As illustrated in Figs. 1 and 2, the battery 100 and the battery 101 have a structure in which the two solid-state battery cells 1a and 1b are laminated. The battery 100 and the battery 101 include the solid-state battery cells 1a and 1b and a connection layer 16 disposed between the solid-state battery cells 1a and 1b.

Each of the solid-state battery cells 1a and 1b includes a positive-electrode current collector 11, a positive-electrode active material layer 12 in contact with the positive-electrode current collector 11, a negative-electrode current collector 13, a negative-electrode active material layer 14 in contact with the negative-electrode current collector 13, and a solid electrolyte layer 15 containing a solid electrolyte disposed between the positive-electrode active material layer 12 and the negative-electrode active material layer 14. The positive-electrode active material layer 12 and the negative-electrode active material layer 14 are disposed between the positive-electrode current collector 11 and the negative-electrode current collector 13. In other words, each of the solid-state battery cells 1a and 1b has a structure in which the positive-electrode current collector 11, the positive-electrode active material layer 12, the solid electrolyte layer 15, the negative-electrode active material layer 14, and the negative-electrode current collector 13 are laminated in this order.

The positive-electrode current collector 11, the positive-electrode active material layer 12, the solid electrolyte layer 15, the negative-electrode active material layer 14, and the negative-electrode current collector 13 are rectangular in a plan view. The positive-electrode current collector 11, the positive-electrode active material layer 12, the solid electrolyte layer 15, the negative-electrode active material layer 14, and the negative-electrode current collector 13 may have any shape in the plan view and may have a shape other than rectangular, such as circular, elliptical, or polygonal.

The negative-electrode current collectors 13 of the two adjacent solid-state battery cells 1a and 1b are laminated via the connection layer 16. In other words, the solid-state battery cell 1a and the solid-state battery cell 1b are laminated via the connection layer 16 and have opposite laminating orders. The solid-state battery cells 1a and 1b and the connection layer 16 have the same shape, position, and size in the plan view. The solid-state battery cell 1a and the solid-state battery cell 1b are separated by the connection layer 16.

The positive-electrode current collector 11, the negative-electrode current collector 13, and the solid electrolyte layer 15 of each of the solid-state battery cells 1a and 1b have the same shape, position, and size in the plan view. The negative-electrode current collector 13 of each of the solid-state battery cells 1a and 1b is in contact with the connection layer 16. In the present specification, the positive-electrode current collector 11 and the negative-electrode current collector 13 may be collectively referred to simply as a "current collector".

The current collector may be formed of any electrically conductive material. For example, the current collector may be a foil-like body, a plate-like body, or a mesh-like body made of stainless steel, nickel, aluminum, iron, titanium, copper, palladium, gold, platinum, or an alloy thereof. The material of the current collector may be appropriately selected in consideration of the production process, not being melted and decomposed at an operating temperature and at an operating pressure, the battery operating potential applied to the current collector, and electrical conductivity. The material of the current collector can also be selected according to the required tensile strength and heat resistance. The current collector may be a high-strength electrolytic copper foil or a clad material composed of different types of metal foils laminated.

The current collector has a thickness of 10 µm or more and 100 µm or less, for example.

A surface of the current collector in contact with the connection layer 16 may be processed into a rough surface with asperities from the perspective of improving adhesion to the connection layer 16 and strengthening the multilayer structure of the solid-state battery cells 1a and 1b. An adhesive component, such as an organic binder, may be applied to the surface of the current collector in contact with the connection layer 16. This can improve the adhesion between the current collector and the connection layer 16.

The positive-electrode active material layer 12 is laminated in contact with a surface of the positive-electrode current collector 11. The positive-electrode active material layer 12 contains at least a positive-electrode active material. The positive-electrode active material layer 12 is typically a layer composed of a positive-electrode material, such as a positive-electrode active material. The positive-electrode active material is a material in which metal ions, such as lithium (Li) ions or magnesium (Mg) ions, are inserted into or removed from the crystal structure at a higher electric potential than the negative electrode and that is consequently oxidized or reduced. The type of positive-electrode active material can be appropriately selected in accordance with the type of battery and may be a known positive-electrode active material.

The positive-electrode active material may be a compound containing lithium and a transition metal element, for example, an oxide containing lithium and a transition metal element or a phosphoric acid compound containing lithium and a transition metal element. Examples of the oxide containing lithium and a transition metal element include lithium nickel composite oxides, such as LiNiₓM₁₋ₓO₂ (wherein M denotes at least one element selected from Co, Al, Mn, V, Cr, Mg, Ca, Ti, Zr, Nb, Mo, and W, and x is 0 < x ≤ 1); layered oxides, such as lithium cobalt oxide (LiCoO₂), lithium nickel oxide (LiNiO₂), and lithium manganese oxide (LiMn₂O₄); and lithium manganese oxides with a spinel structure (for example, LiMn₂O₄, Li₂MnO₃, and LiMO₂). Examples of the phosphoric acid compound containing lithium and a transition metal element include lithium iron phosphate (LiFePO₄) with an olivine structure. Furthermore, the positive-electrode active material may be sulfur (S) or a sulfide, such as lithium sulfide (Li₂S), and in such a case may be positive-electrode active material particles coated with lithium niobate (LiNbO₃) or the like or positive-electrode active material particles to which lithium niobate (LiNbO₃) or the like is added. The positive-electrode active material may be only one of these materials or a combination of two or more of these materials.

As described above, it is sufficient if the positive-electrode active material layer 12 contains at least a positive-electrode active material. The positive-electrode active material layer 12 may be a mixture layer composed of a mixture of the positive-electrode active material and another additive material. Examples of the other additive material include solid electrolytes, such as inorganic solid electrolytes and sulfide solid electrolytes; conductive aids, such as acetylene black; and binders, such as polyethylene oxide and polyvinylidene fluoride. In the positive-electrode active material layer 12, the positive-electrode active material and another additive material, such as a solid electrolyte, can be mixed at a predetermined ratio to improve ionic conductivity and electronic conductivity.

The positive-electrode active material layer 12 has a thickness of 5 µm or more and 300 µm or less, for example.

The negative-electrode active material layer 14 is laminated in contact with a surface of the negative-electrode current collector 13. The negative-electrode active material layer 14 contains at least a negative-electrode active material. The negative-electrode active material layer 14 is typically a layer composed of a negative-electrode material, such as a negative-electrode active material. The negative-electrode active material is a material in which metal ions, such as lithium (Li) ions or magnesium (Mg) ions, are inserted into or removed from the crystal structure at a lower electric potential than the positive electrode and that is consequently oxidized or reduced. The type of negative-electrode active material can be appropriately selected in accordance with the type of battery and may be a known negative-electrode active material.

Examples of the negative-electrode active material include carbon materials, such as natural graphite, artificial graphite, graphite carbon fiber, and resin baked carbon; and alloy materials to be mixed with a solid electrolyte. Examples of the alloy materials include lithium alloys, such as LiAl, LiZn, Li₃Bi, Li₃Cd, Li₃Sb, Li₄Si, Li_{4.4}Pb, Li_{4.4}Sn, Li_{0.17}C, and LiCe; oxides containing lithium and a transition metal element, such as lithium titanate (Li₄Ti₅O₁₂); and metal oxides, such as zinc oxides (ZnO) and silicon oxides (SiOₓ). The negative-electrode active material may be only one of these materials or a combination of two or more of these materials.

As described above, it is sufficient if the negative-electrode active material layer 14 contains at least a negative-electrode active material. The negative-electrode active material layer 14 may be a mixture layer composed of a mixture of the negative-electrode active material and another additive material. Examples of the other additive material include solid electrolytes, such as inorganic solid electrolytes and sulfide solid electrolytes; conductive aids, such as acetylene black; and binders, such as polyethylene oxide and polyvinylidene fluoride. In the negative-electrode active material layer 14, the negative-electrode active material and another additive material, such as a solid electrolyte, can be mixed at a predetermined ratio to improve ionic conductivity and electronic conductivity.

The negative-electrode active material layer 14 has a thickness of 5 µm or more and 300 µm or less, for example.

The positive-electrode active material layer 12 and the negative-electrode active material layer 14 of each of the solid-state battery cells 1a and 1b have the same shape, position, and size in the plan view. The positive-electrode active material layer 12 and the negative-electrode active material layer 14 have a smaller size than the positive-electrode current collector 11 and the negative-electrode current collector 13 in the plan view and are disposed inside the positive-electrode current collector 11 and the negative-electrode current collector 13 in the plan view.

The solid electrolyte layer 15 of each of the solid-state battery cells 1a and 1b is disposed between the positive-electrode active material layer 12 and the negative-electrode active material layer 14 and is in contact with the positive-electrode active material layer 12 and the negative-electrode active material layer 14. The solid electrolyte layer 15 is also disposed outside the positive-electrode active material layer 12 and the negative-electrode active material layer 14 in the plan view. The solid electrolyte layer 15 covers the side surfaces of the positive-electrode active material layer 12 and the negative-electrode active material layer 14 and is in contact with the positive-electrode current collector 11 and the negative-electrode current collector 13 outside the positive-electrode active material layer 12 and the negative-electrode active material layer 14.

The solid electrolyte layer 15 contains at least a solid electrolyte. For example, the solid electrolyte layer 15 contains a solid electrolyte as a main component. The solid electrolyte may be an electronically nonconductive and ionically conductive solid electrolyte used in known batteries. For example, the solid electrolyte may be a solid electrolyte that transfers metal ions, such as lithium ions or magnesium ions. The type of solid electrolyte may be appropriately selected in accordance with the type of ionic species to be transferred. For example, the solid electrolyte may be an inorganic solid electrolyte, such as a sulfide solid electrolyte or an oxide solid electrolyte. Examples of the sulfide solid electrolyte include lithium-containing sulfides, such as Li₂S-P₂S₅, Li₂S-SiS₂, Li₂S-B₂S₃, Li₂S-GeS₂, Li₂S-SiS₂-LiI, Li₂S-SiS₂-Li₃PO₄, Li₂S-Ge₂S₂, Li₂S-GeS₂-P₂S₅, and Li₂S-GeS₂-ZnS. Examples of the oxide solid electrolyte include lithium-containing metal oxides, such as Li₂O-SiO₂ and Li₂O-SiO₂-P₂O₅; lithium-containing metal nitrides, such as LiₓP_{y}O_{1-z}N_{z}; lithium phosphate (Li₃PO₄); and lithium-containing transition metal oxide, such as lithium titanium oxides. The solid electrolyte may be only one of these materials or a combination of two or more of these materials.

The solid electrolyte layer 15 may contain a binder, such as polyethylene oxide or polyvinylidene fluoride, in addition to the solid electrolyte.

The solid electrolyte layer 15 has a thickness of 5 µm or more and 150 µm or less, for example.

The material of the solid electrolyte may be composed of an aggregate of particles. The material of the solid electrolyte may be composed of a sintered structure.

As illustrated in Figs. 1 and 2, the negative-electrode current collector 13 of each of the solid-state battery cells 1a and 1b and the connection layer 16 have the same shape, position, and size in the plan view. A surface of the negative-electrode current collector 13 of each of the solid-state battery cells 1a and 1b facing the connection layer 16 is entirely in contact with the connection layer 16.

The material of the connection layer 16 may be softer than the current collector from the perspective of bonding at the time of lamination and pressure bonding with the current collector and from the perspective of relieving stress on the solid-state battery cells 1a and 1b caused by expansion or contraction of the current collector due to a temperature change. For example, a Young's modulus of the connection layer 16 is lower than a Young's modulus of the positive-electrode current collector 11 and the negative-electrode current collector 13. Thus, the connection layer 16 can be deformed and relieve the stress on the solid-state battery cells 1a and 1b due to a temperature change of the current collector. Furthermore, pressure in the laminating process deforms the connection layer 16 and improves the bonding between the connection layer 16 and the current collector.

The connection layer 16 may have a lower Young's modulus than the solid electrolyte layer 15 from the perspective of relieving stress on the solid-state battery cells 1a and 1b caused by expansion or contraction of the solid electrolyte layer 15 due to a temperature change and improving the reliability of the battery. The connection layer 16 may have a lower Young's modulus than the positive-electrode active material layer 12 and the negative-electrode active material layer 14 from the perspective of relieving stress on the solid-state battery cells 1a and 1b caused by expansion or contraction of the positive-electrode active material layer 12 and the negative-electrode active material layer 14 due to a temperature change and improving the reliability of the battery.

The connection layer 16 may be composed of a solid electrolyte material, an insulating material with insulating properties, an electrically conductive material with electronic conductivity, a semiconductor material, or a mixed material of these materials. The material of the connection layer 16 may be used by adjusting the type and composition of the material in view of ease of preparation in the production process and stress relaxation performance.

The connection layer 16 may contain a solid electrolyte. The connection layer 16 may typically be a layer composed of a solid electrolyte. The solid electrolyte for use in the connection layer 16 may be the solid electrolyte for use in the solid electrolyte layer 15. The solid electrolyte for use in the connection layer 16 and the solid electrolyte for use in the solid electrolyte layer 15 may be of the same type or different types. In particular, it is known that a soft solid electrolyte, such as a sulfide solid electrolyte, is deformed by pressure and easily forms a bonding interface between particles of the solid electrolyte. A solid electrolyte with such characteristics in the connection layer 16 can more easily relieve the stress on the solid-state battery cells 1a and 1b caused by expansion or contraction of the current collector due to a temperature change.

The connection layer 16 may be composed of the same material as the solid electrolyte layer 15. This can decrease the number of types of materials used and enables the battery to be easily produced with high productivity.

The connection layer 16 may contain an electrically conductive material or a semiconductor material. When the connection layer 16 contains an electrically conductive material or a semiconductor material, in addition to the current collector, the connection layer 16 also serves as a conductor, can increase the current capacity taken from the solid-state battery cells 1a and 1b, and can increase the output of the battery. Examples of the electrically conductive material include silver, copper, nickel, zinc, aluminum, palladium, gold, platinum, and alloys of these metals.

The connection layer 16 may be composed of a material containing particles of an electrically conductive material or particles of a semiconductor material in a solid electrolyte. The connection layer 16 may contain a solid electrolyte and an electrically conductive material as main components. For example, the connection layer 16 is composed of a solid electrolyte and an electrically conductive material. As described above, this can relieve the stress caused by expansion or contraction of the current collector due to a temperature change and increase the current capacity.

The connection layer 16 may be composed of a material containing a solid electrolyte or the like in an electrically conductive resin paste from the perspective of adjusting the thermal expansion coefficient and the Young's modulus of the connection layer 16.

When the connection layer 16 is electrically conductive, the positive-electrode current collector 11 and the negative-electrode current collector 13 are electrically separated from each other. For example, an electronically nonconductive layer may be provided between the connection layer 16 and a current collector, a collector lead, and a terminal with an opposite polarity to the current collector in contact with the connection layer 16.

The connection layer 16 may contain a resin. This makes it easier to form a connection layer 16 that is softer and has a lower Young's modulus than the current collector. A resin, which has a relatively small specific gravity, in the connection layer 16 can increase the weight energy density of the battery.

The resin for use in the connection layer 16 may be a thermoplastic resin or a thermosetting resin. Examples of the thermoplastic resin include polyethylene resins, polypropylene resins, acrylic resins, polystyrene resins, vinyl chloride resins, silicone resins, polyamide resins, polyimide resins, fluorinated hydrocarbon resins, polyether resins, butadiene rubber, isoprene rubber, styrene-butadiene rubber (SBR), styrene-butadiene-styrene copolymers (SBS), styrene-ethylene-butadiene-styrene copolymers (SEBS), ethylene-propylene rubber, butyl rubber, chloroprene rubber, and acrylonitrile-butadiene rubber. Examples of the thermosetting resin include (i) amino resins, such as urea resins, melamine resins, and guanamine resins, (ii) epoxy resins, such as bisphenol A type, bisphenol F type, phenol novolac type, and alicyclic, (iii) oxetane resins, (iv) phenolic resins, such as resole type and novolac type, and (v) silicone-modified organic resins, such as silicone epoxy and silicone polyester.

The material of the connection layer 16 may have pores or bubbles. This can more relieve the stress on the solid-state battery cells 1a and 1b caused by expansion or contraction of the current collector due to a temperature change.

The connection layer 16 may contain a noncombustible material, such as a metal, a ceramic, or a solid electrolyte. A noncombustible material in the connection layer 16 also has the function of a layer wall for preventing ignition when the battery generates abnormal heat.

The connection layer 16 may not be formed over the entire surface of the current collector in contact with the connection layer 16 and may be partially formed by forming a pattern on the surface of the current collector in contact with the connection layer 16.

The connection layer 16 may be composed of a plurality of layers of different materials.

The connection layer 16 may have any thickness but preferably has a small thickness in terms of the volume energy density of the battery. The connection layer 16 may have a smaller thickness than the current collector in terms of the volume energy density. For example, the connection layer 16 has a thickness of 1 µm or more and 20 µm or less, preferably 2 µm or more and 10 µm or less. The connection layer 16 with a thickness in such a range can easily relieve the stress caused by expansion or contraction of the current collector due to a temperature change while reducing the decrease in volume energy density.

The connection layer 16 may have any specific gravity but preferably has a small specific gravity in terms of the weight energy density. The connection layer 16 may have a smaller specific gravity than the current collector. This can reduce the influence on the weight energy density, and the battery can have a high energy density.

The battery 101 is an example of a battery in which the solid-state battery cells 1a and 1b of the battery 100 are electrically connected in parallel. Thus, in the battery 101, the solid-state battery cells 1a and 1b are electrically connected in parallel. More specifically, in each of the solid-state battery cells 1a and 1b of the battery 101, the positive-electrode current collector 11 is connected to a positive-electrode collector lead 17, and the negative-electrode current collector 13 is connected to a negative-electrode collector lead 18. In the present specification, the positive-electrode collector lead 17 and the negative-electrode collector lead 18 may be collectively referred to simply as a "collector lead".

The collector lead is a conducting wire that connects current collectors with the same polarity and that is used for charge/discharge or the like. The material of the collector lead may be a metal, such as nickel, stainless steel, aluminum, or copper.

The collector lead and the current collector may be connected by any method, such as adhesion or welding. The collector lead may be connected to the current collector with an electrically conductive adhesive agent or adhesive tape. To prevent short-circuiting, the surface of a portion of the collector lead not connected to the current collector may be insulated.

The solid-state battery cells 1a and 1b of the battery 100 may be electrically connected in parallel by any method and may be electrically connected by a method other than using a collector lead, provided that the positive-electrode current collectors 11 and the negative-electrode current collectors 13 of the solid-state battery cells 1a and 1b are electrically connected to each other. For example, the solid-state battery cells 1a and 1b may be connected in parallel by extending and assembling tabs from the positive-electrode current collector 11 and the negative-electrode current collector 13.

In the above structure, the negative-electrode current collectors 13 of the solid-state battery cells 1a and 1b are adjacent to each other with the connection layer 16, and the electric current from the negative-electrode active material layers 14 of the solid-state battery cells 1a and 1b flows through the two negative-electrode current collectors 13. Thus, the current collectors are shared by the two adjacent solid-state battery cells, and the cross-sectional area of a current path doubles the cross-sectional area of a current path through one current collector without increasing the thickness of the current collectors. This halves the resistance of each current collector. Even for the current path with the doubled cross-sectional area, there is no change in thermal expansion per current collector and in stress on solid-state battery cells 1a and 1b due to a temperature change of the current collectors. Such a structure disperses the stress on the solid-state battery cells 1a and 1b due to a temperature change of the two current collectors separated by the connection layer 16. Thus, the solid-state battery cells 1a and 1b are less likely to break than solid-state battery cells including current collectors with an increased thickness. This increases the current capacity of the current collectors and at the same time prevents the solid-state battery cells 1a and 1b from breaking due to a temperature change. Consequently, the parallel-connected battery 101 can have both high output and high reliability.

The structure of the present embodiment and the structures described in Patent Literature 1 and Patent Literature 2 have the following differences.

Patent Literature 1 discloses a battery in which solid-state battery cells are connected in parallel. The battery described in Patent Literature 1 is a battery in which adjacent solid-state battery cells are connected by electrical contact with a lead electrode for taking an electric current being disposed between current collectors of the solid-state battery cells, and has no connection layer disposed between the solid-state battery cells.

Patent Literature 2 discloses a battery with a structure in which solid-state battery cells separated by an insulating layer are laminated and connected in parallel. In the battery described in Patent Literature 2, however, upper and lower current collectors on either side of the insulating layer are a positive-electrode current collector and a negative-electrode current collector and are different from the present embodiment.

Furthermore, in the structures described in Patent Literature 1 and Patent Literature 2, a multilayer structure with an intervening connection layer and a current collector structure adjacent to a connection layer are different from the present embodiment and can cause the following problems.

In the structure described in Patent Literature 1, an increase in the thickness of the current collector for the purpose of increasing current capacity tends to cause breakage of solid-state battery cells due to a temperature change, as described above. Furthermore, the lead electrode for taking an electric current disposed between the current collectors makes the connection resistance between the current collectors unstable. Thus, at a high charge/discharge rate, an electric current may be locally concentrated in the charge/discharge process and cause heat generation and burning. Furthermore, impact and vibration may change the connection resistance, and variations in the connection resistance may affect the charge/discharge characteristics. Thus, the structure of Patent Literature 1 cannot significantly increase the current capacity of the current collectors and tends to cause a problem with reliability, such as impact resistance.

In the structure described in Patent Literature 2, when the thickness of the insulating layer disposed between the upper and lower adjacent solid-state battery cells is decreased to increase the volume energy density of the battery, the upper and lower current collectors on the insulating layer, which are the positive-electrode current collector and the negative-electrode current collector, may form a short circuit due to the presence of a void, a pinhole, or the like, and tends to cause a problem in achieving both higher output and reliability.

By contrast, the structure according to the present embodiment does not cause the problems of Patent Literature 1 and Patent Literature 2. Furthermore, Patent Literature 1 and Patent Literature 2 do not disclose or suggest a structure relating to both high output and high reliability described in the present embodiment.

The constituents described for the battery 100 and the battery 101 may be appropriately combined. In the battery 100 and the battery 101, although the negative-electrode current collectors 13 of the two adjacent solid-state battery cells 1a and 1b are laminated via the connection layer 16, the positive-electrode current collectors 11 of the two adjacent solid-state battery cells 1a and 1b may be laminated via the connection layer 16.

### [Modified Examples]

Modified examples of the embodiments are described below. The following description of the modified examples focuses on the points of difference from the embodiments or the points of difference between the modified examples, and points once described are not described again or are simply described thereafter.

### (1) Modified Example 1

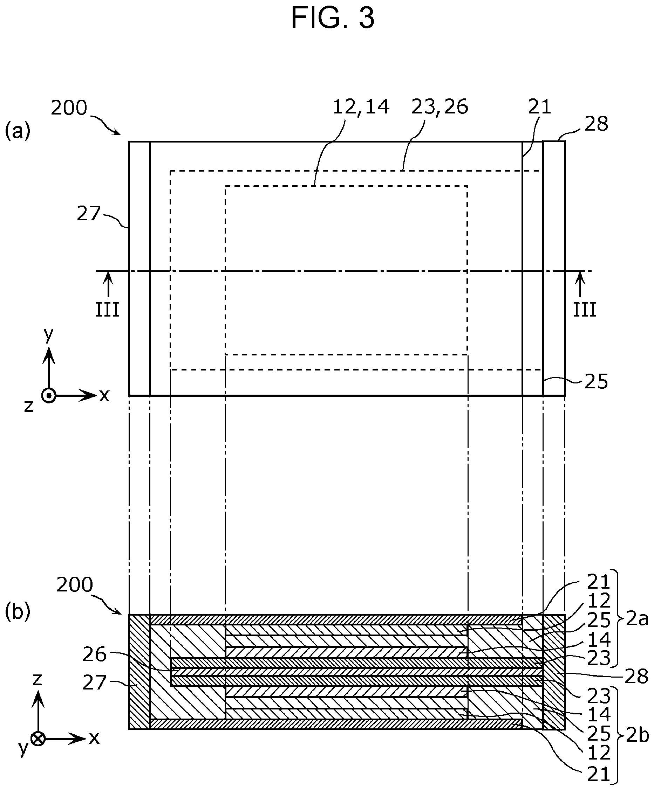

First, Modified Example 1 of the embodiments is described with reference to Fig. 3. Fig. 3 is a schematic view of a battery 200 according to Modified Example 1 of the embodiments. Fig. 3(a) is a top view of the battery 200. In Fig. 3(a), the planar shapes of the constituents of the battery 200 viewed from above are indicated by a solid line or a broken line. Fig. 3(b) is a cross-sectional view of a cross section of the battery 200 taken along the line III-III of Fig. 3(a).

As illustrated in Fig. 3, the battery 200 according to Modified Example 1 of the embodiments includes solid-state battery cells 2a and 2b, a connection layer 26, a positive-electrode terminal 27, and a negative-electrode terminal 28, in place of the solid-state battery cells 1a and 1b, the connection layer 16, the positive-electrode collector lead 17, and the negative-electrode collector lead 18 of the battery 101 according to the embodiment.

The battery 200 has a structure in which the two solid-state battery cells 2a and 2b are laminated. The battery 200 includes the solid-state battery cells 2a and 2b and the connection layer 26 disposed between the solid-state battery cells 2a and 2b. Each of the solid-state battery cells 2a and 2b has a structure in which a positive-electrode current collector 21, the positive-electrode active material layer 12, a solid electrolyte layer 25, the negative-electrode active material layer 14, and a negative-electrode current collector 23 are laminated in this order.

The negative-electrode current collectors 23 of the two adjacent solid-state battery cells 2a and 2b are laminated via the connection layer 26. In other words, the solid-state battery cell 2a and the solid-state battery cell 2b are laminated via the connection layer 26 and have opposite laminating orders. The solid-state battery cells 2a and 2b are larger than the connection layer 26 in a plan view. In the plan view, the solid-state battery cells 2a and 2b have a region not in contact with the connection layer 26. The solid-state battery cells 2a and 2b are laminated such that the solid electrolyte layers 25 of the two adjacent solid-state battery cells 2a and 2b are in contact with each other.

The solid-state battery cells 2a and 2b are electrically connected in parallel by the positive-electrode terminal 27 and the negative-electrode terminal 28. The positive-electrode terminal 27 and the negative-electrode terminal 28 are examples of terminal electrodes.

The positive-electrode current collectors 21 of the solid-state battery cells 2a and 2b have the same shape, position, and size in the plan view. The side surface on the minus side in the x-axis direction of the positive-electrode current collector 21 of each of the solid-state battery cells 2a and 2b is connected to the positive-electrode terminal 27.

The negative-electrode current collectors 23 of the solid-state battery cells 2a and 2b have the same shape, position, and size in the plan view. The negative-electrode current collector 23 of each of the solid-state battery cells 2a and 2b is in contact with the connection layer 26. The side surface on the plus side in the x-axis direction of the negative-electrode current collector 23 of each of the solid-state battery cells 2a and 2b is connected to the negative-electrode terminal 28.

The positive-electrode active material layer 12 and the negative-electrode active material layer 14 of each of the solid-state battery cells 2a and 2b have a smaller size than the positive-electrode current collector 21 and the negative-electrode current collector 23 in the plan view and are disposed inside the positive-electrode current collector 21 and the negative-electrode current collector 23 in the plan view.

The solid electrolyte layer 25 of each of the solid-state battery cells 2a and 2b is disposed between the positive-electrode active material layer 12 and the negative-electrode active material layer 14 and is in contact with the positive-electrode active material layer 12 and the negative-electrode active material layer 14. The solid electrolyte layer 25 is also disposed outside the positive-electrode active material layer 12 and the negative-electrode active material layer 14 in the plan view. The solid electrolyte layer 25 covers the side surfaces of the positive-electrode active material layer 12 and the negative-electrode active material layer 14 and is in contact with the positive-electrode current collector 21 and the negative-electrode current collector 23 outside the positive-electrode active material layer 12 and the negative-electrode active material layer 14. The solid electrolyte layer 25 is also disposed between the positive-electrode current collector 21 and the negative-electrode terminal 28 and is in contact with a side surface of the positive-electrode current collector 21. The solid electrolyte layer 25 is also disposed between the negative-electrode current collector 23 and the positive-electrode terminal 27 and is in contact with a side surface of the negative-electrode current collector 23. The solid electrolyte layer 25 is also disposed to cover a side surface of the negative-electrode current collector 23, which is not the side surface of the negative-electrode current collector 23 in contact with the negative-electrode terminal 28.

Thus, in the battery 200, the solid electrolyte layer 25 without electronic conductivity is in contact with at least part of side surfaces of the positive-electrode active material layer 12, the negative-electrode active material layer 14, the positive-electrode current collector 21, and the negative-electrode current collector 23. This prevents the positive-electrode active material layer 12, the negative-electrode active material layer 14, the positive-electrode current collector 21, and the negative-electrode current collector 23 from coming into contact with a constituent with a different polarity and forming a short circuit.

The solid electrolyte layers 25 of the solid-state battery cells 2a and 2b are in contact with each other between the negative-electrode current collector 23 and the positive-electrode terminal 27 and disposed between the connection layer 26 and the positive-electrode terminal 27. The solid electrolytes in the solid electrolyte layers 25 of the solid-state battery cells 2a and 2b are easily bonded to each other and can strengthen the multilayer structure of the solid-state battery cells 2a and 2b. Furthermore, bonding and integration of the contact portion of the solid electrolyte layers 25 of the solid-state battery cells 2a and 2b can further strengthen the multilayer structure of the solid-state battery cells 2a and 2b.

The negative-electrode current collectors 23 of the solid-state battery cells 2a and 2b and the connection layer 26 have the same shape, position, and size in the plan view. A surface of the negative-electrode current collector 23 of each of the solid-state battery cells 2a and 2b facing the connection layer 26 is entirely in contact with the connection layer 26.

The connection layer 26 may be formed of the same material as the connection layer 16. When a solid electrolyte is used for the connection layer 26, particles of the solid electrolyte used for the connection layer 26 and particles of the solid electrolyte contained in the solid electrolyte layer 25 may form a bonding interface and may be integrated. This can further strengthen the multilayer structure of the connection layer 26 and the solid-state battery cells 2a and 2b.

In the battery 200, the positive-electrode terminal 27 faces the negative-electrode terminal 28. The positive-electrode terminal 27 and the negative-electrode terminal 28 are arranged in parallel in the x-axis direction. In the plan view, the laminated solid-state battery cells 2a and 2b and the connection layer 26 are disposed between the positive-electrode terminal 27 and the negative-electrode terminal 28. In the present specification, the positive-electrode terminal 27 and the negative-electrode terminal 28 may be collectively referred to as a "terminal".

The positive-electrode terminal 27 is electrically connected to the positive-electrode current collector 21 of each of the solid-state battery cells 2a and 2b. The negative-electrode terminal 28 is electrically connected to the negative-electrode current collector 23 of each of the solid-state battery cells 2a and 2b. Thus, in the battery 200, the solid-state battery cells 2a and 2b are electrically connected in parallel.

The positive-electrode terminal 27 is in contact with the side surfaces on the minus side in the x-axis direction of the positive-electrode current collector 21 and the solid electrolyte layer 25 of each of the solid-state battery cells 2a and 2b. The positive-electrode terminal 27 is separated by the solid electrolyte layer 25 from the side surface on the minus side in the x-axis direction of the negative-electrode current collector 23 of each of the solid-state battery cells 2a and 2b.

The negative-electrode terminal 28 is in contact with the side surfaces on the plus side in the x-axis direction of the positive-electrode current collector 21 and the solid electrolyte layer 25 of each of the solid-state battery cells 2a and 2b and the connection layer 26. The negative-electrode terminal 28 is separated by the solid electrolyte layer 25 from the side surface on the plus side in the x-axis direction of the positive-electrode current collector 21 of each of the solid-state battery cells 2a and 2b.

The separation of the positive-electrode terminal 27 from the negative-electrode current collector 23 by the solid electrolyte layer 25 and the separation of the negative-electrode terminal 28 from the positive-electrode current collector 21 by the solid electrolyte layer 25 prevent the contact between the terminals with different polarities and the current collector and prevent short-circuiting.

The terminals may have any shape, provided that the solid-state battery cells 2a and 2b are electrically connected in parallel. The shape of the terminals is plate-like or semi-cylindrical, for example.

The material of the terminals is a cured product of an electrically conductive resin paste, for example. The material of the terminals may be a metal, such as nickel, stainless steel, aluminum, or copper. For a metal terminal, the terminal may be connected to a current collector by bonding or welding a metal processed into a desired shape or may be connected to the current collector with an electrically conductive adhesive agent or adhesive tape.

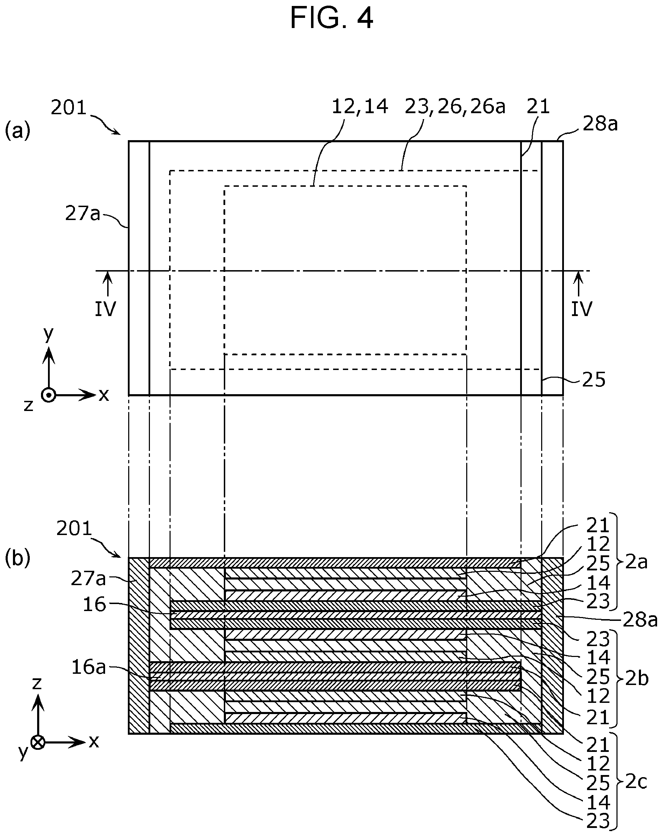

Next, a battery according to another example of the present modified example is described. Fig. 4 is a schematic view of a battery 201 according to another example of Modified Example 1 of the embodiments. Fig. 4(a) is a top view of the battery 201. In Fig. 4(a), the planar shapes of the constituents of the battery 201 viewed from above are indicated by a solid line or a broken line. Fig. 4(b) is a cross-sectional view of a cross section of the battery 201 taken along the line IV-IV of Fig. 4(a). The battery 201 in Fig. 4 is an example of a battery in which three solid-state battery cells 2a, 2b, and 2c are connected in parallel. Thus, the battery 201 is a battery in which a connection layer 26a and the solid-state battery cell 2c are further laminated below the battery 200 illustrated in Fig. 3.

As illustrated in Fig. 4, the battery 201 has a structure in which the three solid-state battery cells 2a, 2b, and 2c are laminated. The battery 200 includes the solid-state battery cells 2a, 2b, and 2c, and the two connection layers 26 and 26a disposed between the solid-state battery cells 2a and 2b and between the solid-state battery cells 2b and 2c. The solid-state battery cells 2a, 2b, and 2c are electrically connected in parallel by a positive-electrode terminal 27a and a negative-electrode terminal 28a.

The positive-electrode current collectors 21 of the two adjacent solid-state battery cells 2b and 2c are laminated via the connection layer 26a. In other words, the solid-state battery cell 2b and the solid-state battery cell 2c are laminated via the connection layer 26a and have opposite laminating orders. The positive-electrode current collectors 21 of the solid-state battery cells 2b and 2c and the connection layer 26a have the same shape, position, and size in a plan view. A surface of the positive-electrode current collector 21 of each of the solid-state battery cells 2b and 2c facing the connection layer 26a is entirely in contact with the connection layer 26a.

The positive-electrode terminal 27a is electrically connected to the positive-electrode current collector 21 of each of the solid-state battery cells 2a, 2b, and 2c. The negative-electrode terminal 28a is electrically connected to the negative-electrode current collector 23 of each of the solid-state battery cells 2a, 2b, and 2c. Thus, in the battery 201, the solid-state battery cells 2a, 2b, and 2c are electrically connected in parallel.

The positive-electrode terminal 27a is in contact with and connected to the side surfaces on the minus side in the x-axis direction of the positive-electrode current collector 21 and the solid electrolyte layer 25 of each of the solid-state battery cells 2a, 2b, and 2c. The positive-electrode terminal 27a is separated by the solid electrolyte layer 25 from the side surface on the minus side in the x-axis direction of the negative-electrode current collector 23 of each of the solid-state battery cells 2a, 2b, and 2c.

The negative-electrode terminal 28a is in contact with the side surfaces on the plus side in the x-axis direction of the positive-electrode current collector 21 and the solid electrolyte layer 25 of each of the solid-state battery cells 2a, 2b, and 2c and the connection layer 26. The negative-electrode terminal 28a is separated by the solid electrolyte layer 25 from the side surface on the plus side in the x-axis direction of the positive-electrode current collector 21 of each of the solid-state battery cells 2a, 2b, and 2c.

Thus, even in a structure in which the three solid-state battery cells 2a, 2b, and 2c are laminated as in the battery 201, the positive-electrode current collectors 21 or the negative-electrode current collectors 23 of two adjacent solid-state battery cells among the three solid-state battery cells 2a, 2b, and 2c are laminated via the connection layer 26 or 26a. This can increase the current capacity of the current collector without increasing the thickness of the current collector and can provide the battery 201 with both higher output and high reliability.

Thus, the number of solid-state battery cells laminated in a battery may be two as in the battery 200, three as in the battery 201, or four or more.

### (2) Modified Example 2

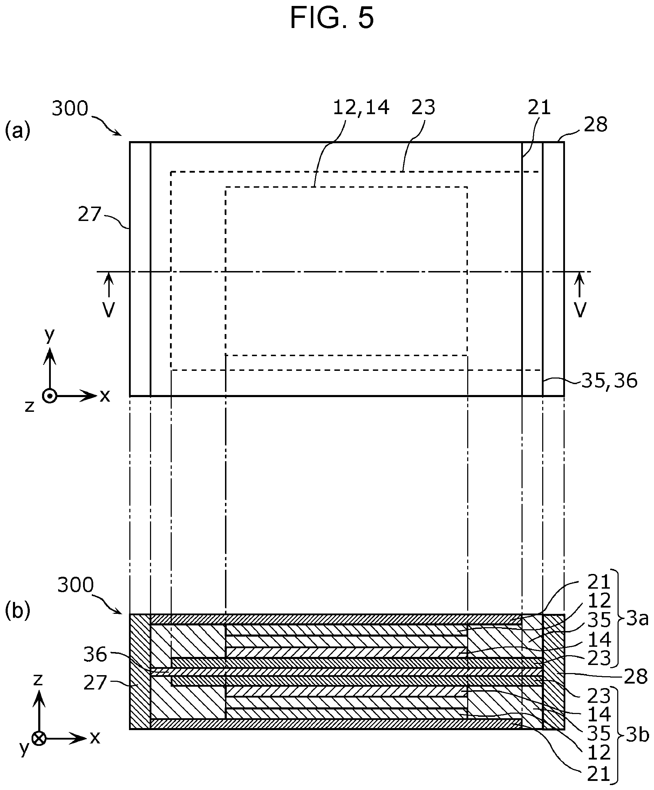

Next, Modified Example 2 of the embodiments is described with reference to Fig. 5. Fig. 5 is a schematic view of a battery 300 according to Modified Example 2 of the embodiments. Fig. 5(a) is a top view of the battery 300. In Fig. 5(a), the planar shapes of the constituents of the battery 300 viewed from above are indicated by a solid line or a broken line. Fig. 5(b) is a cross-sectional view of a cross section of the battery 300 taken along the line V-V of Fig. 5(a).

As illustrated in Fig. 5, the battery 300 according to Modified Example 2 of the embodiments includes solid-state battery cells 3a and 3b and a connection layer 36, in place of the solid-state battery cells 2a and 2b and the connection layer 26, respectively, of the battery 200 according to Modified Example 1 of the embodiments.

The battery 300 has a structure in which the two solid-state battery cells 3a and 3b are laminated. The battery 300 includes the solid-state battery cells 3a and 3b and the connection layer 36 disposed between the solid-state battery cells 3a and 3b. The solid-state battery cells 3a and 3b are electrically connected in parallel by the positive-electrode terminal 27 and the negative-electrode terminal 28. In the plan view, the laminated solid-state battery cells 3a and 3b and the connection layer 36 are disposed between the positive-electrode terminal 27 and the negative-electrode terminal 28.

Each of the solid-state battery cells 3a and 3b has a structure in which the positive-electrode current collector 21, the positive-electrode active material layer 12, a solid electrolyte layer 35, the negative-electrode active material layer 14, and the negative-electrode current collector 23 are laminated in this order.

The negative-electrode current collectors 23 of the two adjacent solid-state battery cells 3a and 3b are laminated via the connection layer 36. The solid-state battery cells 3a and 3b and the connection layer 36 have the same shape, position, and size in the plan view. The solid-state battery cell 3a and the solid-state battery cell 3b are separated by the connection layer 36.

The negative-electrode current collector 23 of each of the solid-state battery cells 3a and 3b is disposed inside the connection layer 36 in the plan view. A surface of the negative-electrode current collector 23 of each of the solid-state battery cells 3a and 3b facing the connection layer 36 is entirely in contact with the connection layer 36.

Two opposite side surfaces of the connection layer 36 are in contact with the positive-electrode terminal 27 and the negative-electrode terminal 28. The connection layer 36 in the plan view is larger than the negative-electrode current collector 23 of each of the solid-state battery cells 3a and 3b.

The connection layer 36, which is larger than the current collector in the plan view, can widely disperse the stress on the solid-state battery cells 3a and 3b due to a temperature change of the current collector, and can provide the battery 300 with higher reliability.

The connection layer 36 is formed of, for example, an electronically nonconductive material to prevent the positive-electrode terminal 27 and the negative-electrode terminal 28 from forming a short circuit. When the connection layer 36 is electrically conductive, an insulating material may be disposed between the connection layer 36 and the positive-electrode terminal 27 or the negative-electrode terminal 28 to insulate the connection layer 36 from the positive-electrode terminal 27 or the negative-electrode terminal 28.

### (3) Modified Example 3

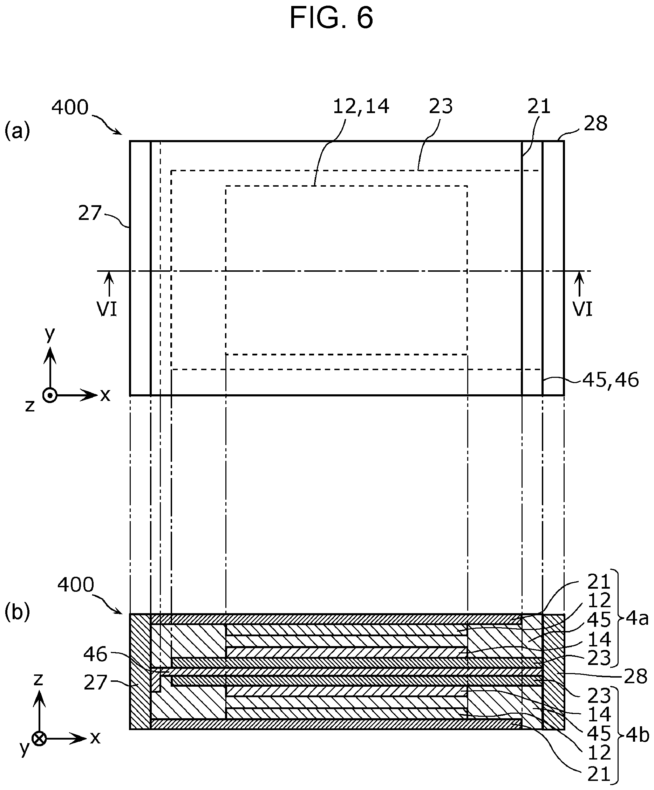

Next, Modified Example 3 of the embodiments is described with reference to Fig. 6. Fig. 6 is a schematic view of a battery 400 according to Modified Example 3 of the embodiments. Fig. 6(a) is a top view of the battery 400. In Fig. 6(a), the planar shapes of the constituents of the battery 400 viewed from above are indicated by a solid line or a broken line. Fig. 6(b) is a cross-sectional view of a cross section of the battery 400 taken along the line VI-VI of Fig. 6(a).

As illustrated in Fig. 6, the battery 400 according to Modified Example 3 of the embodiments includes solid-state battery cells 4a and 4b and a connection layer 46, in place of the solid-state battery cells 2a and 2b and the connection layer 26, respectively, of the battery 200 according to Modified Example 1 of the embodiments.

The battery 400 has a structure in which the two solid-state battery cells 4a and 4b are laminated. The battery 400 includes the solid-state battery cells 4a and 4b and the connection layer 46 disposed between the solid-state battery cells 4a and 4b. The solid-state battery cells 4a and 4b are electrically connected in parallel by the positive-electrode terminal 27 and the negative-electrode terminal 28. In the plan view, the laminated solid-state battery cells 4a and 4b and the connection layer 46 are disposed between the positive-electrode terminal 27 and the negative-electrode terminal 28.

Each of the solid-state battery cells 4a and 4b has a structure in which the positive-electrode current collector 21, the positive-electrode active material layer 12, a solid electrolyte layer 45, the negative-electrode active material layer 14, and the negative-electrode current collector 23 are laminated in this order.

The negative-electrode current collectors 23 of the two adjacent solid-state battery cells 4a and 4b are laminated via the connection layer 46. The solid-state battery cells 4a and 4b and the connection layer 46 have the same shape, position, and size in the plan view. The solid-state battery cell 4a and the solid-state battery cell 4b are separated by the connection layer 46.

Two end portions of the connection layer 46 are in contact with the positive-electrode terminal 27 and the negative-electrode terminal 28. The end portion of the connection layer 46 on the side of the positive-electrode terminal 27 is bent downward between the solid-state battery cell 4a and the solid-state battery cell 4b The end portion of the connection layer 46 on the side of the positive-electrode terminal 27 is in contact with the positive-electrode terminal 27 in the bent state.

To form the connection layer 46 with the bent end portion, the material of each layer may be arranged such that the end portion of the connection layer 46 is bent, or an excessive amount of the material of the connection layer 46 may be disposed and may be pressed out from the layers at the time of laminating press to make the end portion of the connection layer 46 bent.

The connection layer 46 is formed of, for example, an electronically nonconductive material to prevent the positive-electrode terminal 27 and the negative-electrode terminal 28 from forming a short circuit. When the connection layer 46 is electrically conductive, an insulating material may be disposed between the connection layer 46 and the positive-electrode terminal 27 or the negative-electrode terminal 28 to insulate the connection layer 46 from the positive-electrode terminal 27 or the negative-electrode terminal 28.

Due to the bent end portion of the connection layer 46, the connection layer 46 bites into the solid-state battery cell 4b and can be prevented from delaminating from the side surface. The connection layer 46 is in contact with the positive-electrode terminal 27 in the bent state. This can make the contact area between the connection layer 46 and the positive-electrode terminal 27 larger than the contact area between a connection layer 46 without the bent end portion and the positive-electrode terminal 27. Thus, the connection layer 46 facilitates heat dissipation from the current collector to the positive-electrode terminal 27 and can prevent the temperature rise of the battery 400. Thus, the battery 400 can have higher reliability.

Although the end portion of the connection layer 46 is bent downward at a right angle, the end portion may be bent in an oblique direction or in an arc.

### (4) Modified Example 4

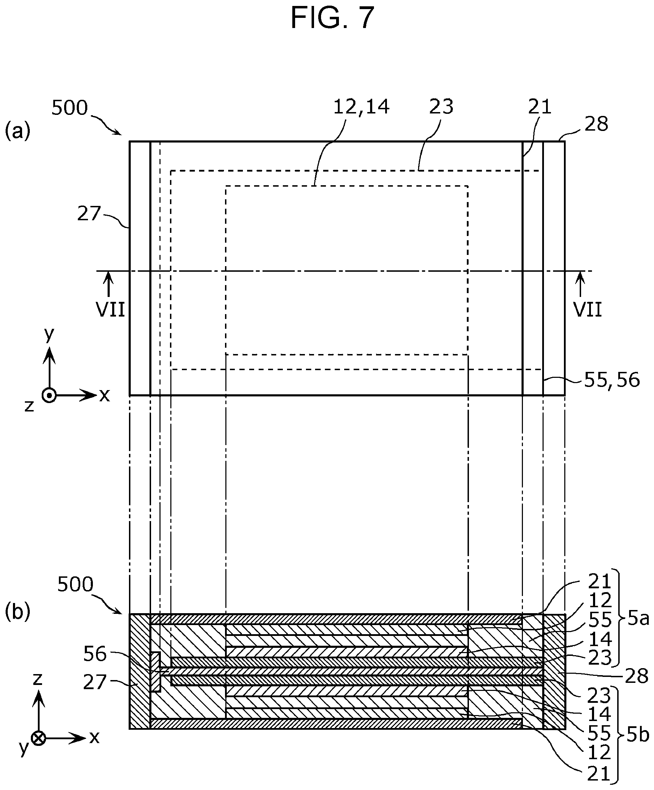

Next, Modified Example 4 of the embodiments is described with reference to Fig. 7. Fig. 7 is a schematic view of a battery 500 according to Modified Example 4 of the embodiments. Fig. 7(a) is a top view of the battery 500. In Fig. 7(a), the planar shapes of the constituents of the battery 500 viewed from above are indicated by a solid line or a broken line. Fig. 7(b) is a cross-sectional view of a cross section of the battery 500 taken along the line VII-VII of Fig. 7(a).

As illustrated in Fig. 7, the battery 500 according to Modified Example 4 of the embodiments includes solid-state battery cells 5a and 5b and a connection layer 56, in place of the solid-state battery cells 2a and 2b and the connection layer 26, respectively, of the battery 200 according to Modified Example 1 of the embodiments.

The battery 500 has a structure in which the two solid-state battery cells 5a and 5b are laminated. The battery 500 includes the solid-state battery cells 5a and 5b and the connection layer 56 disposed between the solid-state battery cells 5a and 5b. The solid-state battery cells 5a and 5b are electrically connected in parallel by the positive-electrode terminal 27 and the negative-electrode terminal 28. In the plan view, the laminated solid-state battery cells 5a and 5b and the connection layer 56 are disposed between the positive-electrode terminal 27 and the negative-electrode terminal 28.

Each of the solid-state battery cells 5a and 5b has a structure in which the positive-electrode current collector 21, the positive-electrode active material layer 12, a solid electrolyte layer 55, the negative-electrode active material layer 14, and the negative-electrode current collector 23 are laminated in this order.

The negative-electrode current collectors 23 of the two adjacent solid-state battery cells 5a and 5b are laminated via the connection layer 56. The solid-state battery cells 5a and 5b and the connection layer 56 have the same shape, position, and size in the plan view. The solid-state battery cell 5a and the solid-state battery cell 5b are separated by the connection layer 56.

Two end portions of the connection layer 56 are in contact with the positive-electrode terminal 27 and the negative-electrode terminal 28. The end portion of the connection layer 56 on the side of the positive-electrode terminal 27 branches into two between the solid-state battery cell 5a and the solid-state battery cell 5b, and the branched end portions are bent upward and downward. The end portions of the connection layer 56 on the side of the positive-electrode terminal 27 are in contact with the positive-electrode terminal 27 in the bent state.

The connection layer 56 is formed of, for example, an electronically nonconductive material to prevent the positive-electrode terminal 27 and the negative-electrode terminal 28 from forming a short circuit. When the connection layer 56 is electrically conductive, an insulating material may be disposed between the connection layer 56 and the positive-electrode terminal 27 or the negative-electrode terminal 28 to insulate the connection layer 56 from the positive-electrode terminal 27 or the negative-electrode terminal 28.

Due to the bent end portions of the connection layer 56, the connection layer 56 bites into the solid-state battery cells 5a and 5b and can be prevented from delaminating from the side surface. The end portion of the connection layer 56 branches and is in contact with the positive-electrode terminal 27 in the bent state. This can make the contact area between the connection layer 56 and the positive-electrode terminal element 27 larger than the contact area between a connection layer 56 without a bent end portion and the positive-electrode terminal element 27 or the contact area between a connection layer 56 with a bent end portion and without the branched end portion and the positive-electrode terminal element 27. Thus, the connection layer 56 further facilitates heat dissipation from the current collector to the positive-electrode terminal 27 and can further prevent the temperature rise of the battery 500. Thus, the battery 500 can have higher reliability.

### (5) Modified Example 5

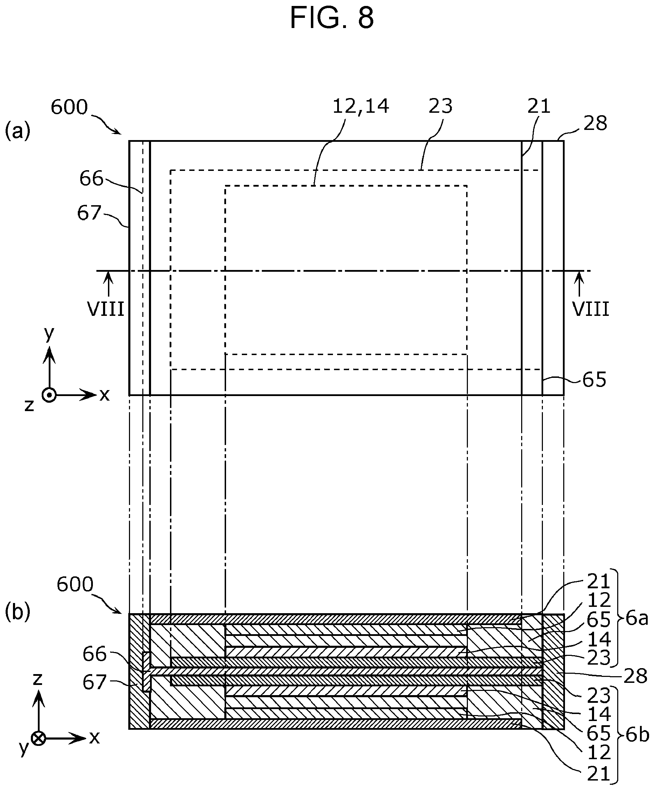

Next, Modified Example 5 of the embodiments is described with reference to Fig. 8. Fig. 8 is a schematic view of a battery 600 according to Modified Example 5 of the embodiments. Fig. 8(a) is a top view of the battery 600. In Fig. 8(a), the planar shapes of the constituents of the battery 600 viewed from above are indicated by a solid line or a broken line. Fig. 8(b) is a cross-sectional view of a cross section of the battery 600 taken along the line VIII-VIII of Fig. 8(a).

As illustrated in Fig. 8, the battery 600 according to Modified Example 5 of the embodiments includes solid-state battery cells 6a and 6b, a connection layer 66, and a positive-electrode terminal 67, in place of the solid-state battery cells 2a and 2b, the connection layer 26, and the positive-electrode terminal 27, respectively, of the battery 200 according to Modified Example 1 of the embodiments.

The battery 600 has a structure in which the two solid-state battery cells 6a and 6b are laminated. The battery 600 includes the solid-state battery cells 6a and 6b and the connection layer 66 disposed between the solid-state battery cells 6a and 6b. The solid-state battery cells 6a and 6b are electrically connected in parallel by the positive-electrode terminal 67 and the negative-electrode terminal 28. In the plan view, the laminated solid-state battery cells 6a and 6b and the connection layer 66 are disposed between the positive-electrode terminal 67 and the negative-electrode terminal 28.

Each of the solid-state battery cells 6a and 6b has a structure in which the positive-electrode current collector 21, the positive-electrode active material layer 12, a solid electrolyte layer 65, the negative-electrode active material layer 14, and the negative-electrode current collector 23 are laminated in this order.

The negative-electrode current collectors 23 of the two adjacent solid-state battery cells 6a and 6b are laminated via the connection layer 66. The solid-state battery cell 6a and the solid-state battery cell 6b are separated by the connection layer 66.

The connection layer 66 in the plan view is larger than the solid-state battery cells 6a and 6b. Part of the connection layer 66 does not overlap the solid-state battery cells 6a and 6b in the plan view but overlaps the positive-electrode terminal 67. The end portion of the connection layer 66 on the side of the negative-electrode terminal 28 is in contact with the negative-electrode terminal 28. The end portion of the connection layer 66 on the side of the positive-electrode terminal 67 is branched into two, and the branched end portions are bent upward and downward. The end portions of the connection layer 66 on the side of the positive-electrode terminal 67 are buried in the positive-electrode terminal 67 in the bent state.

The connection layer 66 is formed of, for example, an electronically nonconductive material to prevent the positive-electrode terminal 67 and the negative-electrode terminal 28 from forming a short circuit. When the connection layer 66 is electrically conductive, an insulating material may be disposed between the connection layer 66 and the positive-electrode terminal 67 or the negative-electrode terminal 28 to insulate the connection layer 66 from the positive-electrode terminal 67 or the negative-electrode terminal 28.

The connection layer 66 with the bent end portion can be prevented from delaminating from the side surface. The end portion of the connection layer 66 branches and is in buried in the positive-electrode terminal 67 in the bent state. This can make the contact area between the connection layer 66 and the positive-electrode terminal element 67 larger than the contact area between a connection layer 66 without a bent end portion and the positive-electrode terminal element 67 or the contact area between a connection layer 66 with a bent end portion and without the branched end portion and the positive-electrode terminal element 67. Thus, the connection layer 66 further facilitates heat dissipation from the current collector to the positive-electrode terminal 67 and can further prevent the temperature rise of the battery 600. Furthermore, the positive-electrode terminal 67 covers the end portion of the connection layer 66, and the fixing strength between the positive-electrode terminal 67 and the connection layer 66 is also increased. Thus, the battery 600 can have higher reliability.

### (6) Modified Example 6

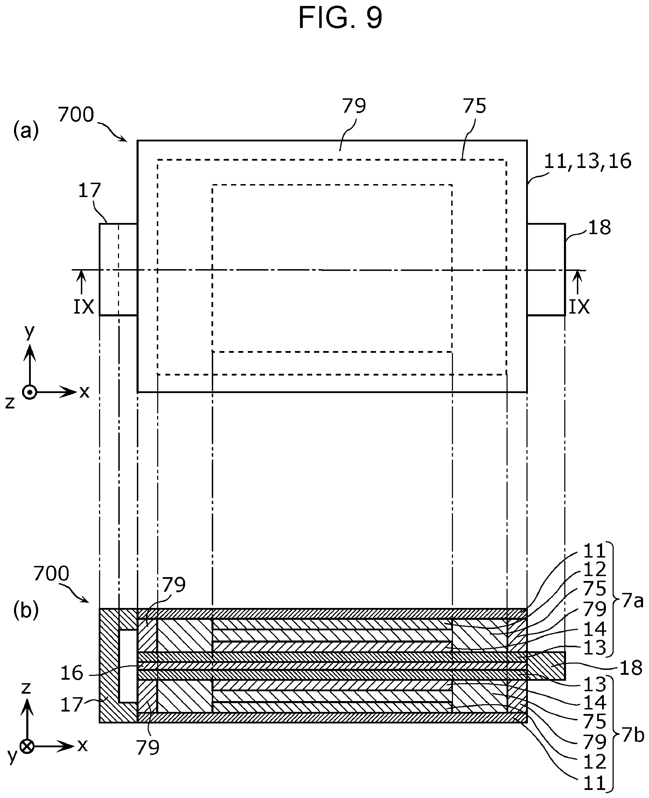

Next, Modified Example 6 of the embodiments is described with reference to Fig. 9. Fig. 9 is a schematic view of a battery 700 according to Modified Example 6 of the embodiments. Fig. 9(a) is a top view of the battery 700. In Fig. 9(a), the planar shapes of the constituents of the battery 700 viewed from above are indicated by a solid line or a broken line. Fig. 9(b) is a cross-sectional view of a cross section of the battery 700 taken along the line IX-IX of Fig. 9(a).

As illustrated in Fig. 9, the battery 700 according to Modified Example 6 of the embodiments includes solid-state battery cells 7a and 7b, in place of the solid-state battery cells 1a and 1b of the battery 101 according to the embodiment. The solid-state battery cells 7a and 7b include a sealing member 79 and are different from the solid-state battery cells 1a and 1b in this point.

The battery 700 has a structure in which the two solid-state battery cells 7a and 7b are laminated. The battery 700 includes the solid-state battery cells 7a and 7b and the connection layer 16 disposed between the solid-state battery cells 7a and 7b. The solid-state battery cells 7a and 7b are electrically connected in parallel by the positive-electrode collector lead 17 and the negative-electrode collector lead 18.

Each of the solid-state battery cells 7a and 7b has a structure in which a positive-electrode current collector 11, the positive-electrode active material layer 12, a solid electrolyte layer 75, the negative-electrode active material layer 14, and the negative-electrode current collector 13 are laminated in this order. Each of the solid-state battery cells 7a and 7b further includes the sealing member 79 between the positive-electrode current collector 11 and the negative-electrode current collector 13.

The solid electrolyte layer 75 of each of the solid-state battery cells 7a and 7b is disposed between the positive-electrode active material layer 12 and the negative-electrode active material layer 14 and is in contact with the positive-electrode active material layer 12 and the negative-electrode active material layer 14. The solid electrolyte layer 75 is also disposed outside the positive-electrode active material layer 12 and the negative-electrode active material layer 14 in the plan view. The solid electrolyte layer 75 covers the side surfaces of the positive-electrode active material layer 12 and the negative-electrode active material layer 14 and is in contact with the positive-electrode current collector 11 and the negative-electrode current collector 13. The side surfaces of the solid electrolyte layer 75 are covered with the sealing member 79.

The sealing member 79 of each of the solid-state battery cells 7a and 7b are disposed outside the positive-electrode active material layer 12, the negative-electrode active material layer 14, and the solid electrolyte layer 75 in the plan view, and have a rectangular cylindrical shape surrounding the outer periphery of the positive-electrode active material layer 12, the negative-electrode active material layer 14, and the solid electrolyte layer 75. The sealing member 79 is in contact with the positive-electrode current collector 11 and the negative-electrode current collector 13 in a region outside the positive-electrode active material layer 12, the negative-electrode active material layer 14, and the solid electrolyte layer 75.

The sealing member 79 is formed of an insulating material, for example. The sealing member 79 functions as a spacer to keep the distance between the positive-electrode current collector 11 and the negative-electrode current collector 13.

For example, the sealing member 79 contains a first material. The sealing member 79 may contain the first material as a main component. The sealing member 79 may be composed only of the first material.

The first material may be a generally known material of a sealing member of batteries, such as a sealant. The sealant may be a ceramic sealant or a resin sealant. The first material may contain an insulating ionically nonconductive material. The first material may contain a resin, for example. For example, the first material may contain any of a thermosetting resin, a photocurable resin, such as an ultraviolet-curable resin, and a hot-melt resin (thermoplastic resin). For example, the first material may contain at least one selected from the group consisting of thermosetting or photocurable epoxy resins, acrylic resins, polyimide resins, and silsesquioxanes.

Due to the elasticity of a resin, a sealing member 79 containing the resin can relieve the stress on the solid-state battery cells 7a and 7b due to a temperature change of the current collector in contact with the sealing member 79. This can improve the reliability of the battery 700.

The sealing member 79 may contain a particulate metal oxide material. The metal oxide material may be silicon oxide, aluminum oxide, titanium oxide, zinc oxide, cerium oxide, iron oxide, tungsten oxide, zirconium oxide, calcium oxide, zeolite, or glass. For example, the sealing member 79 may be formed of a resin material containing metal oxide material particles dispersed therein.

The metal oxide material particles have a size smaller than or equal to the distance between the positive-electrode current collector 21 and the negative-electrode current collector 23. The metal oxide material particles may have the shape of a perfect circle (sphere), ellipsoid, or rod.

Thus, the sealing member 79 disposed outside the positive-electrode active material layer 12, the negative-electrode active material layer 14, and the solid electrolyte layer 75 in each of the solid-state battery cells 7a and 7b can prevent damage to the positive-electrode active material layer 12, the negative-electrode active material layer 14, and the solid electrolyte layer 75 caused by impact from the outside or the like. Thus, the battery 700 can have higher reliability.

### (7) Modified Example 7

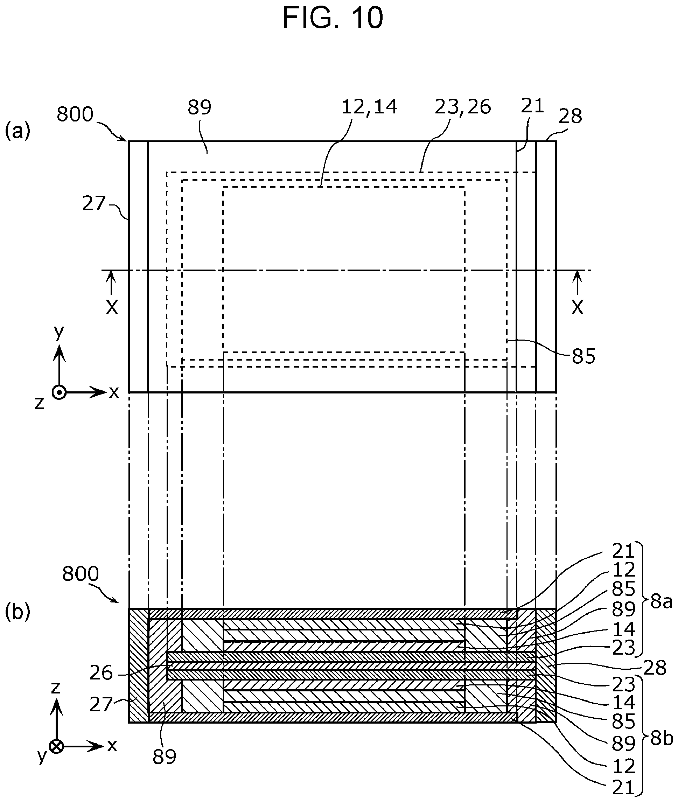

Next, Modified Example 7 of the embodiments is described with reference to Fig. 10. Fig. 10 is a schematic view of a battery 800 according to Modified Example 7 of the embodiments. Fig. 10(a) is a top view of the battery 800. In Fig. 10(a), the planar shapes of the constituents of the battery 800 viewed from above are indicated by a solid line or a broken line. Fig. 10(b) is a cross-sectional view of a cross section of the battery 800 taken along the line X-X of Fig. 10(a).

As illustrated in Fig. 10, the battery 800 according to Modified Example 7 of the embodiments includes solid-state battery cells 8a and 8b, in place of the solid-state battery cells 2a and 2b of the battery 200 according to Modified Example 1 of the embodiments. The solid-state battery cells 8a and 8b include a sealing member 89 and are different from the solid-state battery cells 2a and 2b in this point.

The battery 800 has a structure in which the two solid-state battery cells 8a and 8b are laminated. The battery 800 includes the solid-state battery cells 8a and 8b and the connection layer 26 disposed between the solid-state battery cells 8a and 8b. Each of the solid-state battery cells 8a and 8b has a structure in which the positive-electrode current collector 21, the positive-electrode active material layer 12, a solid electrolyte layer 85, the negative-electrode active material layer 14, and the negative-electrode current collector 23 are laminated in this order. Each of the solid-state battery cells 8a and 8b further includes the sealing member 89 between the positive-electrode current collector 21 and the negative-electrode current collector 23.

The solid-state battery cells 8a and 8b are electrically connected in parallel by the positive-electrode terminal 27 and the negative-electrode terminal 28.

The solid electrolyte layer 85 of each of the solid-state battery cells 8a and 8b is disposed between the positive-electrode active material layer 12 and the negative-electrode active material layer 14 and is in contact with the positive-electrode active material layer 12 and the negative-electrode active material layer 14. The solid electrolyte layer 85 is also disposed outside the positive-electrode active material layer 12 and the negative-electrode active material layer 14 in the plan view. The solid electrolyte layer 85 covers the side surfaces of the positive-electrode active material layer 12 and the negative-electrode active material layer 14 and is in contact with the positive-electrode current collector 21 and the negative-electrode current collector 23. The side surfaces of the solid electrolyte layer 85 are covered with the sealing member 89.

The sealing member 89 of each of the solid-state battery cells 8a and 8b are disposed outside the positive-electrode active material layer 12, the negative-electrode active material layer 14, and the solid electrolyte layer 85 in the plan view, and have a rectangular cylindrical shape surrounding the outer periphery of the positive-electrode active material layer 12, the negative-electrode active material layer 14, and the solid electrolyte layer 85. The sealing member 89 is in contact with the positive-electrode current collector 21 and the negative-electrode current collector 23 in a region outside the positive-electrode active material layer 12, the negative-electrode active material layer 14, and the solid electrolyte layer 85. The sealing member 89 is also disposed between the positive-electrode current collector 21 and the negative-electrode terminal 28 and between the negative-electrode current collector 23 and the positive-electrode terminal 27. This can further prevent the contact between the positive-electrode current collector 21 and the negative-electrode terminal 28 and between the negative-electrode current collector 23 and the positive-electrode terminal 27, prevent short-circuiting, and improve the reliability of the battery 800.

The sealing member 89 of the solid-state battery cell 8a is in contact with the sealing member 89 of the solid-state battery cell 8b between the negative-electrode current collector 23 and the positive-electrode terminal 27 and between the connection layer 26 and the positive-electrode terminal 27. In other words, the solid-state battery cells 8a and 8b are laminated such that the sealing members 89 of the two adjacent solid-state battery cells 8a and 8b are in contact with each other. The sealing members 89 laminated so as to be in contact with each other are easily integrated and can further strengthen the multilayer structure of the solid-state battery cells 8a and 8b. Furthermore, the sealing member 89 of the solid-state battery cell 8a and the sealing member 89 of the solid-state battery cell 8b form a C-shape and sandwich the negative-electrode current collector 23 of each of the solid-state battery cells 8a and 8b and the connection layer 26. This prevents the separation of the two negative-electrode current collectors 23 from the connection layer 26. This can improve the reliability of the battery 800.

### [Method for Producing Battery]

Next, an example of a method for producing the battery according to one of the embodiments and the modified examples is described. The following is a method for producing the battery 200 according to Modified Example 1 of the embodiments. The batteries 101, 201, 300, 400, 500, 600, 700, and 800 can also be produced in the same manner.

First, pastes used to form the positive-electrode active material layer 12 and the negative-electrode active material layer 14 by printing are prepared. For example, a Li₂S-P₂S₅ sulfide glass powder with an average particle size of approximately 10 µm composed mainly of triclinic crystals is prepared as a solid electrolyte raw material to be used in a mixture for each of the positive-electrode active material layer 12 and the negative-electrode active material layer 14. The glass powder may be a glass powder with a high ionic conductivity of approximately 2 to 3 x 10⁻³ S/cm. For example, a Li·Ni·Co·Al composite oxide (LiNi_{0.8}Co_{0.15}Al_{0.05}O₂) powder with an average particle size of approximately 5 µm and with a layered structure is used as a positive-electrode active material. A mixture of the positive-electrode active material and the glass powder is dispersed in an organic solvent or the like to prepare a positive-electrode active material layer paste. For example, a natural graphite powder with an average particle size of approximately 10 µm is used as a negative-electrode active material. A mixture of the negative-electrode active material and the glass powder is dispersed in an organic solvent or the like to prepare a negative-electrode active material layer paste in the same manner.

Next, for example, a copper foil with a thickness of approximately 30 µm is prepared as a material for the positive-electrode current collector 21 and the negative-electrode current collector 23. For example, each of the positive-electrode active material layer paste and the negative-electrode active material layer paste is printed in a predetermined shape and with a thickness in the range of approximately 50 µm to 100 µm on one surface of the copper foil by a screen printing method. The positive-electrode active material layer paste and the negative-electrode active material layer paste are dried in the temperature range of 80°C to 130°C and have a thickness in the range of 30 µm to 60 µm. Thus, the positive-electrode active material layer 12 and the negative-electrode active material layer 14 are formed on a current collector (copper foil).

For a solid-state battery cell with a sealing member, such as the battery 700 or 800, the material of the sealing member is applied to a current collector along the outer periphery of the positive-electrode active material layer 12 or the negative-electrode active material layer 14.

Next, a mixture containing the glass powder is dispersed in an organic solvent or the like to prepare a solid electrolyte layer paste. For example, the solid electrolyte layer paste is printed with a thickness of approximately 100 µm using a metal mask on a surface of the positive-electrode active material layer 12 and the negative-electrode active material layer 14 opposite the current collector. The paste is then dried in the temperature range of 80°C to 130°C. Thus, the solid electrolyte layer 25 is formed on each of the positive-electrode active material layer 12 and the negative-electrode active material layer 14.

To form the connection layer 26 on the back side of the current collector on which each of the positive-electrode active material layer 12 and the negative-electrode active material layer 14 is formed, for example, the solid electrolyte layer paste is printed with a thickness of approximately 10 µm and is dried in the temperature range of 80°C to 130°C. Thus, the connection layer 26 is formed on the back side of the current collector. Subsequently, the solid electrolyte layer 25 on the positive-electrode active material layer 12 is brought into contact with the solid electrolyte layer 25 on the negative-electrode active material layer 14, and the negative-electrode current collectors 23 are laminated via the connection layer 26. This multilayer structure is disposed in a die with a rectangular outer shape. An unnecessary portion of the current collector may be removed by laser cutting or the like before laminating. An elastic sheet with a thickness of 70 µm and an elastic modulus of approximately 5 x 10⁶ Pa is then inserted between a pressure die punch and the multilayer structure. With this structure, pressure is applied to the multilayer structure through the elastic sheet. Subsequently, the multilayer structure is pressed at 50°C at a pressure of 300 MPa for 90 seconds to form a multilayer structure of the solid-state battery cells 2a and 2b and the connection layer 26. Finally, an electrically conductive resin paste is applied to the side surfaces of the multilayer structure of the solid-state battery cells 2a and 2b and the connection layer 26 and is heat-cured at approximately 150°C to form terminals for connecting the solid-state battery cells 2a and 2b. Thus, the battery 200 is produced.

The method and order of the production of the battery and the material used for each layer are not limited to those described above.

For example, in the above method, the solid electrolyte layer 25 on the positive-electrode active material layer 12 and the solid electrolyte layer 25 on the negative-electrode active material layer 14 are laminated so as to face each other without forming the connection layer 26 on the back side of the current collector on which the positive-electrode active material layer 12 and the negative-electrode active material layer 14 are formed, thereby forming the solid-state battery cells 2a and 2b. The connection layer 26 is formed on a surface of the negative-electrode current collector 23 of the solid-state battery cell 2a or 2b formed in this manner, the surface being opposite the negative-electrode active material layer 14. The negative-electrode current collectors 23 may be laminated via the connection layer 26 to form the multilayer structure of the solid-state battery cells 2a and 2b and the connection layer 26.

Alternatively, for example, the solid-state battery cells 2a and 2b and the connection layer 26 may be individually formed, and the negative-electrode current collectors 23 may be laminated via the connection layer 26 to form the multilayer structure of the solid-state battery cells 2a and 2b and the connection layer 26. The solid-state battery cells 2a and 2b and the connection layer 26 may be bonded and laminated using an adhesive agent or an adhesive tape. The connection layer 26 itself may be composed of an adhesive agent or an adhesive tape.

Although the positive-electrode active material layer paste, the negative-electrode active material layer paste, the solid electrolyte layer paste, and the electrically conductive resin paste are applied by printing in the above production method, the present invention is not limited thereto. The printing method may also be a doctor blade method, a calendar method, a spin coating method, a dip coating method, an ink jet method, an offset method, a die coating method, a spray method, or the like.

The electrically conductive resin paste used to form terminals and the like is, for example, a thermosetting electrically conductive paste containing metal particles and a resin as main components. The electrically conductive resin paste may be a thermosetting electrically conductive paste containing electrically conductive metal particles with a high melting point, metal particles with a low melting point, and a resin. The electrically conductive metal particles with a high melting point has a melting point of 400°C or more, for example. The material of the electrically conductive metal particles with a high melting point is silver, copper, nickel, zinc, aluminum, palladium, gold, platinum, or an alloy thereof, for example. The melting point of the metal particles with a low melting point may be equal to or lower than the curing temperature of the electrically conductive resin paste, for example, 300°C or less. Examples of the material of the metal particles with a low melting point of 300°C or less include tin, tin-zinc alloys, tin-silver alloys, tin-copper alloys, tin-aluminum alloys, tin-lead alloys, indium, indium-silver alloys, indium-zinc alloys, indium-tin alloys, bismuth, bismuth-silver alloys, bismuth-nickel alloys, bismuth-tin alloys, bismuth-zinc alloys, and bismuth-lead alloys.

By using an electrically conductive resin paste containing such metal particles with a low melting point, solid phase and liquid phase reactions proceed at contact sites between metal particles in the electrically conductive resin paste and a metal constituting the current collector even at a heat curing temperature lower than the melting point of the electrically conductive metal particles with a high melting point Thus, at the interface between the electrically conductive resin paste and the current collector, a diffusion region alloyed by the solid phase and liquid phase reactions is formed around the contact sites. This improves connection reliability and thermal conductivity between a terminal composed of the electrically conductive resin paste and the current collector. When the electrically conductive metal particles with a high melting point are composed of silver or a silver alloy, and the current collector is formed of copper, the alloy thus formed may be a silver-copper alloy, which is an electrically conductive alloy. Furthermore, the electrically conductive metal particles with a high melting point and the current collector may be combined to form a silver-nickel alloy or a silver-palladium alloy.

The electrically conductive metal particles and the metal particles with a low melting point may have any shape, such as spherical, flaky, or acicular. The electrically conductive metal particles with a high melting point and the metal particles with a low melting point may have any particle size. For example, the alloying reaction and diffusion of smaller particles proceed at a lower temperature. Thus, the particle size and shape are appropriately selected in consideration of the effects of thermal history on process design and battery characteristics.

The resin used for the thermosetting electrically conductive resin paste functions as a binder for bonding and is selected according to the production process employed, for example, according to printability and coating performance. For example, the resin used for the electrically conductive resin paste includes a thermosetting resin. Examples of the thermosetting resin include (i) amino resins, such as urea resins, melamine resins, and guanamine resins, (ii) epoxy resins, such as bisphenol A type, bisphenol F type, phenol novolac type, and alicyclic, (iii) oxetane resins, (iv) phenolic resins, such as resole type and novolac type, and (v) silicone-modified organic resins, such as silicone epoxy and silicone polyester. The resin may be only one of these materials or a combination of two or more of these materials.

### (Other Embodiments)

Although a battery according to the present disclosure has been described on the basis of the embodiments and the modified examples, the present disclosure is not limited to these embodiments. Various modifications of these embodiments and modified examples and combinations of constituents of the embodiments and modified examples conceived by a person skilled in the art without departing from the gist of the present disclosure are also fall within the scope of the present disclosure.

Various modifications, replacement, addition, and omission may be made to the embodiments and modified examples within the scope and equivalents of the appended claims.

For example, although the solid electrolyte layer is in contact with the side surfaces of the positive-electrode active material layer and the negative-electrode active material layer in the embodiments and modified examples, the present disclosure is not limited thereto. The solid electrolyte layer may not in contact with the side surfaces of the positive-electrode active material layer and the negative-electrode active material layer, and the solid electrolyte layer, the positive-electrode active material layer, and the negative-electrode active material layer are completely superposed with each other in the plan view.

For example, although the collector lead or terminal is connected to a side surface of the current collector in the embodiments and modified examples, the present disclosure is not limited thereto. The collector lead or terminal may be connected to an upper surface or a lower surface of the current collector.

For example, although the solid-state battery cells are electrically connected in parallel only by the collector lead or terminal in the embodiments and modified examples, the present disclosure is not limited thereto. The solid-state battery cells may be electrically connected in parallel by a combination of a collector lead and a terminal.

For example, although only the end portion of the connection layer on the side in contact with the positive-electrode terminal is bent in Modified Examples 3 to 5, the present disclosure is not limited thereto. The connection layer may be bent at its end portions in a plurality of directions. Furthermore, the bent end portion of the connection layer may be buried in the solid electrolyte layer without being in contact with the terminal.

For example, although the sealing member is disposed so as to surround the outer periphery of the positive-electrode active material layer, the negative-electrode active material layer, and the solid electrolyte layer in Modified Examples 6 and 7, the present disclosure is not limited thereto. It is sufficient if the sealing member is disposed outside at least part of the side surfaces of the positive-electrode active material layer, the negative-electrode active material layer, and the solid electrolyte layer. For example, sealing members may be opposed to each other in parallel in the x-axis direction or in the y-axis direction in the plan view on either side of the positive-electrode active material layer, the negative-electrode active material layer, and the solid electrolyte layer.

### Industrial Applicability

A battery according to the present disclosure can be utilized as a secondary battery, such as an all-solid-state lithium-ion battery, for use in various electronic equipment or automobiles, for example.

### Reference Signs List

1a, 1b, 2a, 2b, 2c, 3a, 3b, 4a, 4b, 5a, 5b, 6a, 6b, 7a, 7b, 8a, 8b solid-state battery cell
11, 21 positive-electrode current collector
12 positive-electrode active material layer
13, 23 negative-electrode current collector
14 negative-electrode active material layer
15, 25, 35, 45, 55, 65, 75, 85 solid electrolyte layer
16, 26, 26a, 36, 46, 56, 66 connection layer
17 positive-electrode collector lead
18 negative-electrode collector lead
27, 27a, 67 positive-electrode terminal
28, 28a negative-electrode terminal
79, 89 sealing member
100, 101, 200, 201, 300, 400, 500, 600, 700, 800 battery

## Claims

1. A battery comprising:
a plurality of solid-state battery cells; and
a connection layer between the plurality of solid-state battery cells,
each of the plurality of solid-state battery cells including a structure in which a positive-electrode current collector, a positive-electrode active material layer, a solid electrolyte layer containing a solid electrolyte, a negative-electrode active material layer, and a negative-electrode current collector are laminated in this order, wherein
the plurality of solid-state battery cells are electrically connected in parallel, and
the positive-electrode current collectors or the negative-electrode current collectors of two adjacent solid-state battery cells among the plurality of solid-state battery cells are laminated via the connection layer.

2. The battery according to Claim 1, wherein
a Young's modulus of the connection layer is lower than a Young's modulus of the positive-electrode current collector and the negative-electrode current collector.

3. The battery according to Claim 1 or 2, wherein
the connection layer contains a solid electrolyte.

4. The battery according to any one of Claims 1 to 3, wherein
the connection layer contains a resin.

5. The battery according to any one of Claims 1 to 4, wherein
the connection layer contains an electrically conductive material.

6. The battery according to Claim 1 or 2, wherein
the connection layer is composed of a solid electrolyte and an electrically conductive material.

7. The battery according to any one of Claims 1 to 6, wherein
at least part of an end portion of the connection layer is bent.

8. The battery according to any one of Claims 1 to 6, further comprising
a terminal electrode in contact with a side surface of the plurality of solid-state battery cells and coupled to the negative-electrode current collector or the positive-electrode current collector of each of the plurality of solid-state battery cells,
wherein at least part of an end portion of the connection layer in a bent state is in contact with the terminal electrode.

9. The battery according to any one of Claims 1 to 6, further comprising
a terminal electrode in contact with a side surface of the plurality of solid-state battery cells and coupled to the negative-electrode current collector or the positive-electrode current collector of each of the plurality of solid-state battery cells,
wherein at least part of an end portion of the connection layer in a bent state is buried in the terminal electrode.

10. The battery according to any one of Claims 1 to 9, wherein
the solid electrolyte layer of each of the plurality of solid-state battery cells is in contact with at least part of side surfaces of the positive-electrode current collector, the positive-electrode active material layer, the negative-electrode current collector, and the negative-electrode active material layer.

11. The battery according to Claim 10, wherein
the plurality of solid-state battery cells are laminated such that the solid electrolyte layers of two adjacent solid-state battery cells among the plurality of solid-state battery cells are in contact with each other.

12. The battery according to any one of Claims 1 to 11, wherein
each of the plurality of solid-state battery cells includes a sealing member disposed between the positive-electrode current collector and the negative-electrode current collector, and
the sealing member is disposed outside the positive-electrode active material layer and the negative-electrode active material layer in a plan view.
